Europäisches Patentamt

European Patent Office

Office européen des brevets

(19)

(11) Veröffentlichungsnummer: **0 079 609**
**B1**

(12) # EUROPÄISCHE PATENTSCHRIFT

(45) Veröffentlichungstag der Patentschrift:
08.05.85

(51) Int. Cl.⁴: **B 29 B 9/00**

(21) Anmeldenummer: 82110572.3

(22) Anmeldetag: 16.11.82

(54) Vorrichtung zum Zuleiten von schmelzflüssigen Kunststoffsträngen zu einer schrägen Ablaufrinne.

(30) Priorität: 17.11.81 DE 3145613

(43) Veröffentlichungstag der Anmeldung:
25.05.83 Patentblatt 83/21

(45) Bekanntmachung des Hinweises auf die Patenterteilung:
08.05.85 Patentblatt 85/19

(84) Benannte Vertragsstaaten:
BE CH FR GB IT LI LU NL

(56) Entgegenhaltungen:
DE - B - 2 503 455
GB - A - 1 554 125

(73) Patentinhaber: AUTOMATIK Apparate-Maschinenbau GmbH, Ostring 19, D-8754 Grossostheim (DE)

(72) Erfinder: Philipp, Heinrich, Leiderer Stadtweg 9, D-8750 Aschaffenburg (DE)
Erfinder: Lettner, Horst H., Jahnstrasse 22, D-8752 Glattbach (DE)
Erfinder: Hunke, Friedrich, Westring 38, D-8754 Grossostheim 2 (DE)

(74) Vertreter: Bardehle, Heinz, Dipl.-Ing. et al, Patent- und Rechtsanwälte Bardehle-Pagenberg-Dost-Altenburg & Partner Postfach 86 06 20, D-8000 München 86 (DE)

## Beschreibung

Die Erfindung bezieht sich auf eine Vorrichtung zum Zuleiten von schmelzflüssigen Kunststoffsträngen zu einer schrägen Ablaufrinne, die an ihrem oberen Ende bis hinter die Fallinie der aus Düsen austretenden Stränge reicht, in der Betriebslage die Stränge auffängt und in eine Stellung schwenkbar ist, in der sie den freien Durchtritt der Stränge neben ihr gestattet, wobei auf das obere Ende der Ablaufrinne ein Kühlwasserzulauf gerichtet ist.

Eine derartige Vorrichtung ist aus der DE-B-2 503 455 bekannt. Bei dieser Vorrichtung geht die Ablaufrinne im Bereich ihres oberen Endes in eine verschwenkbare Klappe über, die auf einer quer zur Ablaufrinne verlaufenden, am oberen Ende der Klappe angeordneten Achse derart gelagert ist, daß beim Verschwenken der Klappe diese zwei Lagen einnehmen kann, nämlich eine Betriebslage, in der die der Achse abgewandte Seite der Klappe in die Ablaufrinne so übergeht, daß sich hinsichtlich des Ablaufs der Stränge und des Kühlwassers ein geschlossenes Gebilde ergibt, in dem die Klappe Bestandteil der Ablaufrinne ist, wobei die Klappe die aus den Düsen austretenden Stränge auffängt und damit dem Kühlwasser der Ablaufrinne zuleitet, und eine Außerbetriebslage, in der die Klappe derart von der Ablaufrinne weggeschwenkt ist, daß die aus den Düsen austretenden Stränge zwischen der Klappe und der Ablaufrinne herabfallen. Bei diesem Betriebszustand handelt es sich im allgemeinen darum, vor Beginn der Verarbeitung von Kunststoffsträngen, die danach über die Ablaufrinne einem Granulator zugeführt werden, das anfangs aus den Düsen austretende Material zunächst abzuleiten, da dieses in der Regel Verschmutzungen enthält bzw. noch nicht seine endgültige gleichmäßige Zusammensetzung erfahren hat. Die Stränge werden dabei durch einen zwischen der Klappe und der Rückseite der Ablaufrinne bestehenden relativ schmalen Schacht geleitet, in dem wegen der gegebenen räumlichen Verhältnisse eine Verschmutzungsgefahr durch auswandernde Stränge besteht. Die Reinigung der betreffenden Stelle ist darum schwierig, weil, wie gesagt, die Klappe zusammen mit der Rückseite der Ablaufrinne den erwähnten Schacht bildet, dessen Inneres relativ unzugänglich ist.

Der Erfindung liegt die Aufgabe zugrunde, die Ablaufrinne so zu gestalten, daß sie in allen Betriebslagen gut zugänglich und die Verschmutzungsgefahr weitgehend beseitigt ist. Erfindungsgemäß geschieht dies dadurch, daß die Ablaufrinne mit einer von ihrem oberen Ende entfernt angeordneten, quer zu ihr verlaufenden Schwenkachse versehen ist und der oberhalb dieser Achse angeordnete Auffangteil der Ablaufrinne aus seiner Betriebslage von den Strängen weg derart schwenkbar ist, daß die Bewegung des oberen Endes des Auffangteils durch die Stränge hindurch in eine Außerbetriebslage verläuft, in der die Fallinie der Stränge hinter der gesamten Ablaufrinne liegt.

Bei dieser Gestaltung bleibt die Rückseite der Ablaufrinne sowohl in der Betriebslage des verschwenkbaren Teils als auch in dessen Außerbetriebslage stets frei zugänglich, da durch die vorstehend beschriebene Konstruktion eine Schachtbildung vermieden ist. Dabei wird den hinter der gesamten Ablaufrinne, also auch den hinter dem verschwenkten Teil herabfallenden Strängen die Tendenz genommen, irgendwo anzukleben, so daß die Verschmutzungsgefahr beseitigt ist. Im übrigen würden sich Verschmutzungen an dem verschwenkten Teil bzw. dem Rest der Ablaufrinne nicht erheblich auswirken, da diese immer nur an der Rückseite der betreffenden Bauteile entstehen würden, auf der im normalen Betrieb keine Stränge ablaufen, während bei der bekannten Vorrichtung Verschmutzungen der Vorderseite der genannten Klappe auftreten können, welche Vorderseite in der Betriebslage die Stränge aufzufangen und der Ablaufrinne zuzuführen hat.

Je nach Länge der Ablaufrinne kann man die Schwenkachse an verschiedenen Stellen der Ablaufrinne anordnen. Handelt es sich um eine relativ kurze Ablaufrinne, so ordnet man die Schwenkachse zweckmäßig am unteren Ende der Ablaufrinne an. In diesem Fall wird also die gesamte Ablaufrinne verschwenkt.

Bei längeren Ablaufrinnen kann man die Schwenkachse etwa in der Mitte der Ablaufrinne oder im oberen Drittel der Ablaufrinne anordnen. In diesen Fällen wird dann nur der oberhalb der Schwenkachse angeordnete Teil der Ablaufrinne verschwenkt.

Der Grad der Verschwenkung richtet sich danach, welche Zugänglichkeit man im Bereich der Düsen haben möchte. Je weiter die Ablaufrinne bzw. der betreffende Teil von ihr verschwenkt wird, desto größer wird die Zugänglichkeit der Düsen.

Da beim Verschwenken des Auffangteils der Ablaufrinne deren oberes Ende durch die Stränge hindurch bewegt wird, ist es möglich, mit diesem Ende ein Trennelement zu koppeln, das beim Bewegen dieses Endes durch die Stränge hindurch diese durchtrennt. Dieses Durchtrennen liefert den Vorteil, daß beim Verschwenken des Auffangteils der Ablaufrinne aus der Außerbetriebslage, in der die Stränge hinter der gesamten Ablaufrinne vorbeifallen, in die Betriebslage automatisch die zunächst oberhalb der Auftrennstelle verlaufenden Stränge der Ablaufrinne zugeleitet werden, ohne daß es irgendeiner Manipulation an den Düsen bedarf.

Das Trennelement läßt sich als eine quer zu den Strängen verlaufende Stange ausbilden, die mit Abstand von dem durch die Stränge hindurchbewegten Ende des Auffangteils an diesem angeordnet ist, bei der Bewegung des betreffenden Endes die Stränge auffängt und von dem Auffangteil fernhält. An der durch die Stränge hindurchbewegten Stange hängen sich die Stränge zunächst auf, fallen dann jedoch aufgrund der Schwerkraft von der Stange ab, dadurch die räumlich getrennte Anordnung der Stange vom oberen Ende des Auffangteils dafür gesorgt ist, daß die Stange nicht gekühlt wird und infolgedessen die Stränge an der Stange zunächst den schmelzflüssigen Zustand beibehalten In diesem Zustand der Stränge können diese dann ohne weiteres von der Stange hinter der Ablaufrinne herabfallen.

Es ist auch möglich, das Trennelement als Messer auszubilden, das bei seiner Bewegung die Düsen überstreicht. In diesem Falle erfolgt die Trennung der Stränge unmittelbar unterhalb der Düsen, so daß das aus den Düsen nach Trennung der Stränge nachfließende Strangmaterial auf das nach dem Durchtrennen der Stränge in die Betriebslage geschwenkte Auffangteil auftrifft und von diesem dann der Ablaufrinne zugeleitet wird.

In den Figuren sind Ausführungsbeispiele der Erfindung dargestellt. Es zeigt

Fig. 1 die Vorrichtung mit am unteren Ende der Ablaufrinne angeordneter Schwenkachse, wobei sich die Ablaufrinne in der Außerbetriebslage befindet,

Fig. 2 die gleiche Vorrichtung, jedoch mit in Betriebslage gezeichneter Ablaufrinne,

Fig. 3 die Vorrichtung mit in der Mitte der Ablaufrinne liegender Schwenkachse, wobei die Außerbetriebslage des oberhalb der Schwenkachse befindlichen Teils der Ablaufrinne strichpunktiert ist,

Fig. 4 die Vorrichtung mit im oberen Drittel der Ablaufrinne liegender Schwenkachse,

Fig. 5a—d die Vorrichtung mit am oberen Ende des verschwenkbaren Teils der Ablaufrinne angeordneter Stange in vier verschiedenen Betriebsphasen,

Fig. 6a, b und 7a, b die Vorrichtung mit einem am oberen Ende des Auffangteils angeordneten Messer.

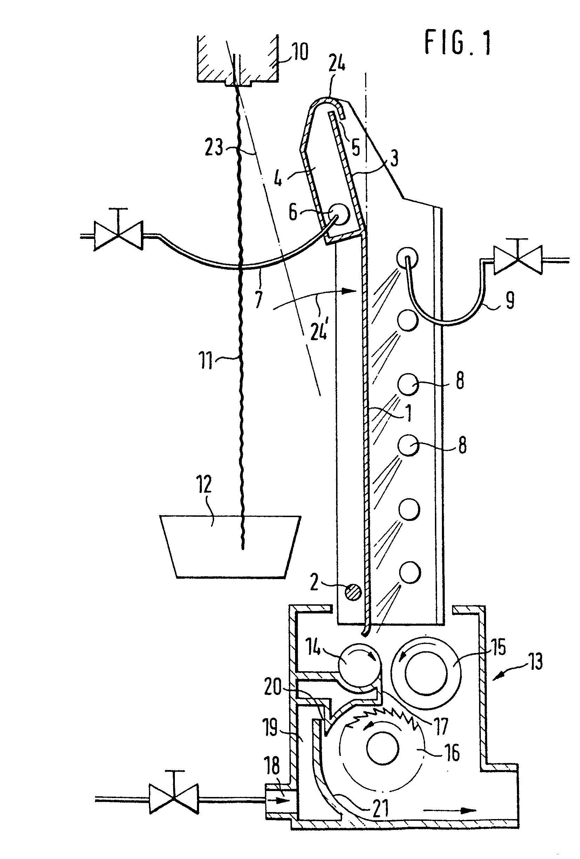

Die in der Fig. 1 dargestellte Vorrichtung enthält die Ablaufrinne 1, an deren unterem Ende die Schwenkachse 2 angeordnet ist, um die die Ablaufrinne 1 verschwenkt werden kann. An ihrem oberen Ende enthält die Ablaufrinne 1 das Auffangteil 3, das aus dem Wasserkasten 4 mit Wasserüberlauf 5 besteht. Dem Wasserkasten 4 wird über das Anschlußstück 6 und die Zuleitung 7 Kühlwasser zugeführt. Vor der Ablaufrinne 1 sind außerdem mehrere Sprühdüsen 8 angeordnet, denen über die Zuleitung 9 Kühlwasser zugeführt wird. Die Sprühdüsen 8 sind auf die Ablaufrinne 1 gerichtet und besprühen diese mit Kühlwasser.

Bei der in Fig. 1 dargestellten Außerbetriebslage der Ablaufrinne 1 befindet sich oberhalb und seitlich von der Ablaufrinne 1 die Düsenanordnung 10, aus der Kunststoffstränge in schmelzflüssigem Zustand austreten. In der dargestellten Außerbetriebslage fließt ein solcher Kunststoffstrang 11 senkrecht nach unten und wird von dem Behälter 12 aufgefangen.

Unterhalb der Ablaufrinne 1 ist ein Granulator 13 angeordnet, bestehend aus den beiden Einzugswalzen 14 und 15 und dem Fräser 16, der mit dem Gegenmesser 17 zusammenwirkt. Dem Granulator 13 wird über den Anschluß 18 Kühlwasser zugeführt, das in dem Kühlwasserraum 19 hochsteigt und über die Düse 20 dem rund um den Fräser 16 verlaufenden Boden 21 zugeleitet wird. Hier trifft das derart zugeleitete Kühlwasser auf das vom Fräser 16 geschnittene Granulat, das dann in der Richtung des eingezeichneten Pfeils aus dem Granulator 13 herausgeschwemmt wird.

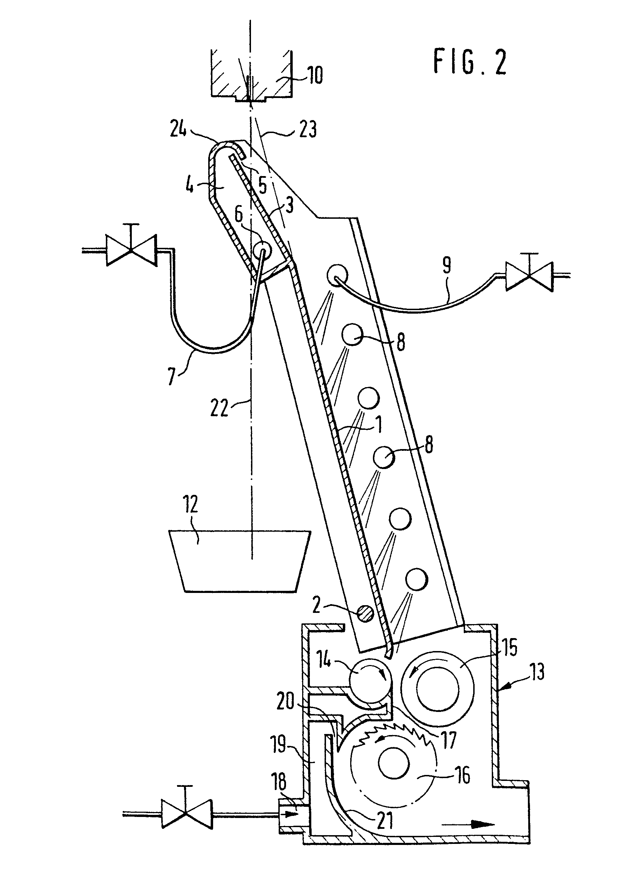

Fig. 2 zeigt die gleiche Vorrichtung in der Betriebslage. Wie ersichtlich, fallen in dieser Lage die aus der Düsenanordnung 10 austretenden Stränge zunächst in Richtung der eingezeichneten strichpunktierten Linie 22 senkrecht nach unten, bis sie von dem Auffangteil 3 aufgefangen und der Ablaufrinne 1 zugeleitet werden. Die Stränge gelangen dann in den Bereich der Einzugswalzen 14 und 15 und werden vom Fräser 16 zur Granulat zerschnitten. Aufgrund einer entsprechenden Geschwindigkeit der Einzugswalzen 14 und 15 werden dabei die Stränge straff über die Ablaufrinne 1 gezogen, sie nehmen dabei die durch die strichpunktierte Linie 23 dargestellte Lage ein.

Die vorstehend beschriebenen Vorgänge, soweit sie das Kühlen und Granulieren der Stränge betreffen, sind aus der DE-B-2 503 455 bekannt.

In der in der Fig. 1 dargestellten Außerbetriebslage können die Stränge 11 ungehindert von der Ablaufrinne 1 und dem ein Bestandteil der Ablaufrinne 1 bildenden Auffangteil 3 senkrecht in den Behälter 12 herabfallen. Diese Betriebsphase wird beim Anfahren der Vorrichtung verwendet, bei dem aus der Düsenanordnung 10 Kunststoffmaterial austritt, das häufig noch nicht die erforderliche Qualität besitzt. Derartiges Material darf nicht mit dem aus vollwertigem Material bestehenden Granulat vermischt werden. Wie ersichtlich, ist dabei der Bereich unterhalb der Düsenanordnung 10 frei zugänglich, irgendeine Verschmutzungsgefahr für die Ablaufrinne 1 besteht nicht. Wenn nun aus der Düsenanordnung 10 vollwertiges Material austritt, wird die Ablaufrinne 1 mit dem Auffangteil 3 um die Achse 2 entgegen der Richtung des in Fig. 1 eingezeichneten Pfeils 24' verschwenkt und gelangt in die in Fig. 2 dargestellte Betriebslage, in der, wie oben bereits erläutert, die aus der Düsenanordnung 10 austretenden Stränge von dem Auffangteil 3 aufgefangen werden, die dann in bekannter Weise zu Granulat verarbeitet werden.

Die Bewegung der Ablaufrinne 1 mit dem Auffangteil 3 erfolgt in beiden Richtungen durch die Stränge 11 bzw. 23 hindurch, sofern deren Fluß nicht unterbrochen wird. Um zu vermeiden, daß bei diesem Verschwenkungsvorgang die schmelzflüssigen Stränge am oberen Ende 24 des Auffangteils 3 festkleben, wird der Strangfluß in bekanter Weise duch ein nicht dargestelltes Ventil an der Düsenanordnung 10 kurzfristig unterbrochen.

Wie ersichtlich, geht die Ableitung von qualitativ unzureichendem Kunststoffmaterial auf sehr einfache Weise vor sich, nämlich dadurch, daß man das Kunststoffmaterial an der Ablaufrinne 1 mit dem Auffangteil 3 vorbeileitet, und zwar auf der rückwärtigen Seite der Ablaufrinne 1, so daß das abgeleitete Kunststoffmaterial, also die in der Fig. 1 mit 11 bezeichneten Stränge, gut beobachtet werden kann. Wird dann festgestellt, daß qualitativ einwandfreies Kunststoffmaterial aus der Düsenanordnung 10 austritt, so wird, wie oben erläutert, die Ablaufrinne 1 mit dem Auffangteil 3 in den Weg der Stränge 11 eingeschwenkt, wozu, wie gesagt, der Fluß des Kunststoffmaterials kurzzeitig gestoppt wird. Mit dem Wiederaustreten von Kunststoffmaterial aus der Düsenanordnung 10 finden die betreffenden Stränge 23 dann das unterhalb der Düsenanordnung 10 liegende Auffangteil 3 vor, von dem dann, wie vorstehend beschrieben, die Stränge 23 der Ablaufrinne 1 und dem Granulator 13 zugeleitet werden.

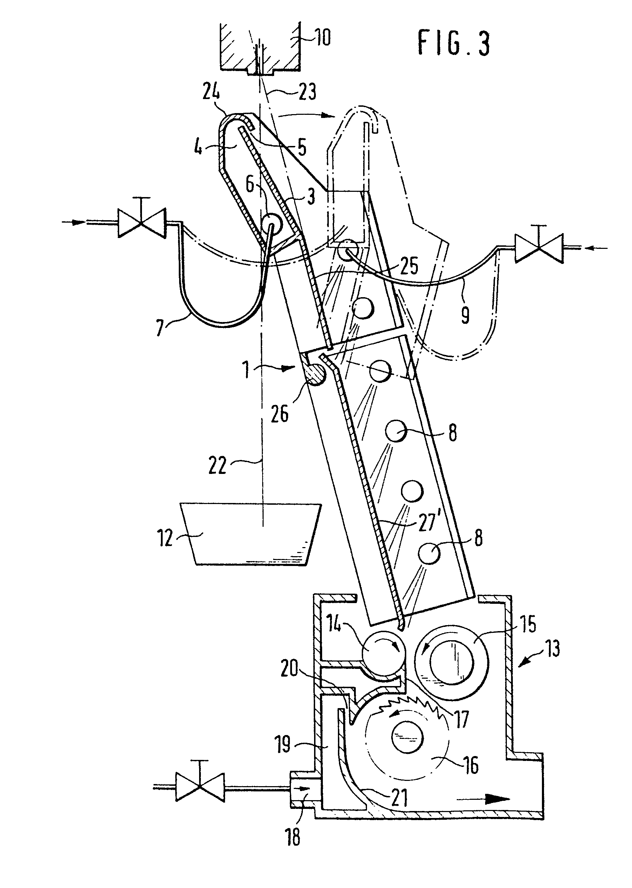

Bei der in der Fig. 3 dargestellten Vorrichtung handelt es sich um eine Abwandlung der Vorrichtung gemäß den Fig. 1 und 2. Bei der Vorrichtung gemäß der Fig. 3 wird nur ein Teil der Ablaufrinne 1 verschwenkt, nämlich deren oberer Bereich 25 mit dem Auffangteil 3, wobei für die Verschwenkung des Bereichs 25 mit dem Auffangteil 3 die Schwenkachse 26 vorgesehen ist, die in der Mitte der Ablaufrinne 1 liegt, die hier aus dem unteren Bereich 27' und dem oberen Bereich 25 mit dem Auffangteil 3 besteht.

In der Fig. 3 ist noch strichpunktiert die Außerbetriebslage des oberen Bereichs 25 dargestellt, so daß die Fig. 3 sowohl die Betriebslage als auch die Außerbetriebslage zeigt. Bezüglich der weiteren Funktion der Vorrichtung sei auf die obigen Erläuterungen zu den Fig. 1 und 2 verwiesen.

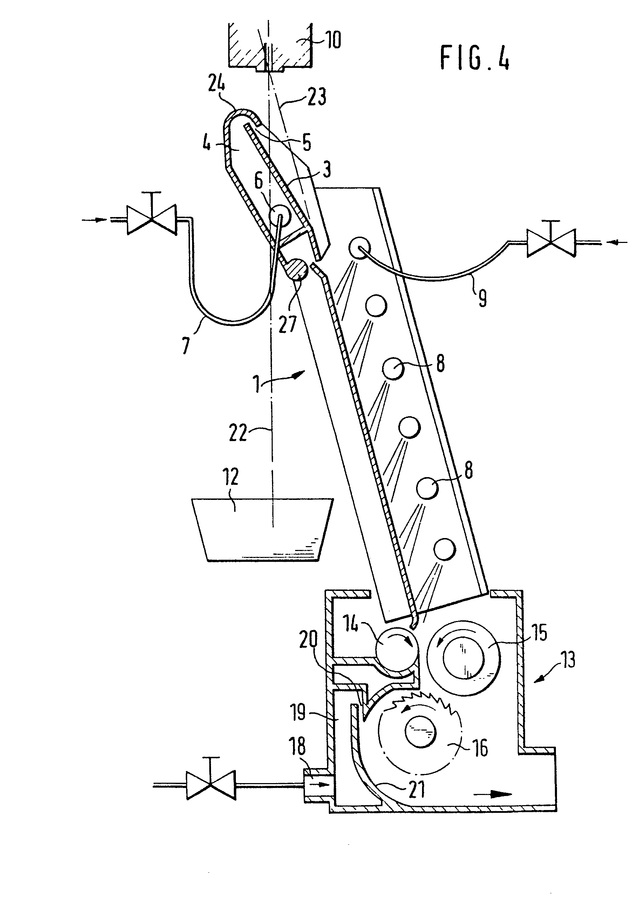

In der Fig. 4 ist eine weitere Variante der Vorrichtung gemäß den Fig. 1—3 dargestellt, bei der die Schwenkachse für den verschwenkbaren Teil der Ablaufrinne 1 noch höher als bei der Vorrichtung gemäß Fig. 3 liegt. Es ist dies die Schwenkachse 27, oberhalb deren nur das in diesem Falle allein verschwenkbare Auffangteil 3 angeordnet ist. Das Auffangteil 3 kann hier (nicht dargestellt) in eine ähnliche Lage verschwenkt werden, wie diese in strichpunktierten Linien in der Fig. 3 gezeigt ist. Darüber hinaus sei auf die Erläuterungen zu den Fig. 1—3 verwiesen.

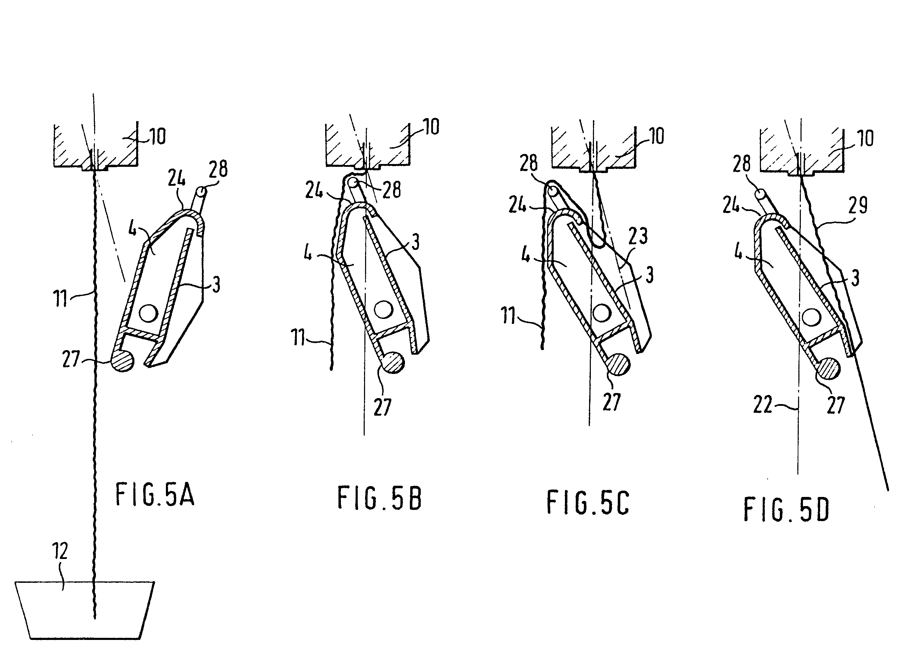

Bei der in den Fig. 5a—d dargestellten Vorrichtung handelt es sich um eine solche, wie sie in der Fig. 4 gezeigt ist. Allerdings ist in den Fig. 5a—d nur der in diesem Zusammenhang interessante Teil der Vorrichtung dargestellt, nämlich das verschwenkbare Auffangteil 3. Das Auffangteil 3 ist hier mit einer als Trennelement wirkenden Stange 28 versehen, die quer zu den Strängen 11 bzw. 29 verläuft, und zwar dabei parallel zur Reihe der Düsen in der Düsenanordnung 10. Die Stange 28 ist mit Abstand von dem durch die Stränge hindurchbewegten Ende 24 des Auffangteils 3 angeordnet, so daß sie durch das dem Wasserkasten 4 zugeführten Kühlwasser nicht gekühlt werden kann. Durch die als Trennelement wirkende Stange 28 wird erreicht, daß das Verschwenken des Auffangteils 3 ohne Unterbrechung des Flusses von Kunststoffmaterial aus der Düsenanordnung 10 erfolgen kann.

In der Fig. 5a ist die Außerbetriebslage der Vorrichtung dargestellt, bei der das Auffangteil 3 von dem Strang 11 weg verschwenkt ist. Der Strang 11 besteht hier aus zunächst noch qualitativ unzureichendem Material, das von dem Behälter 12 aufgefangen wird.

Wenn nunmehr aus der Düsenanordnung 10 qualitativ einwandfreies Material fließt, wird das Auffangteil 3 durch die Stränge 11 verschwenkt, und zwar in die in Fig. 5b dargestellte Lage. Dabei hängen sich die aus der Düsenanordnung 10 austretenden Stränge an der Stange 28 zunächst auf und fallen beidseitig der Stange 28 herab, wie dies in der Fig. 5c gezeigt ist. Da die Stange 28 nicht gekühlt ist, bleiben die an der Stange 28 zunächst haftenden Stränge im schmelzflüssigen Zustand und reißen schließlich unter der Wirkung der Schwerkraft ab. Es ergibt sich somit der in der Fig. 5d dargestellte Betriebszustand, bei dem das aus der Düsenanordnung 10 nachfließende Strangmaterial 29 von dem Auffangteil 3 aufgefangen und dem nicht dargestellten Teil der Ablaufrinne zugeleitet wird, die in der Fig. 4 dargestellt ist.

Durch diese Anordnung wird erreicht, daß das Umschalten und damit Verschwenken von der in Fig. 5a dargestellten Außerbetriebslage in die in den Fig. 5b, c und d dargestellte Betriebslage ohne Unterbrechung des Flusses der Stränge erfolgen kann, wobei durch die als Trennelement wirkende Stange 28 dafür gesorgt wird, daß die Umschaltung des Strangflusses mit der Verschwenkung des Auffangteils 3 automatisch vor sich geht.

Um auch ein langsames Erstarren von an der Stange 28 gegebenenfalls festklebenden Resten von Strangmaterial zu vermeiden, wird die Stange 28 auf etwa den Schmelzpunkt des zu verarbeitenden Strangmaterials aufgeheizt, beispielsweise durch eine elektrische Heizung.

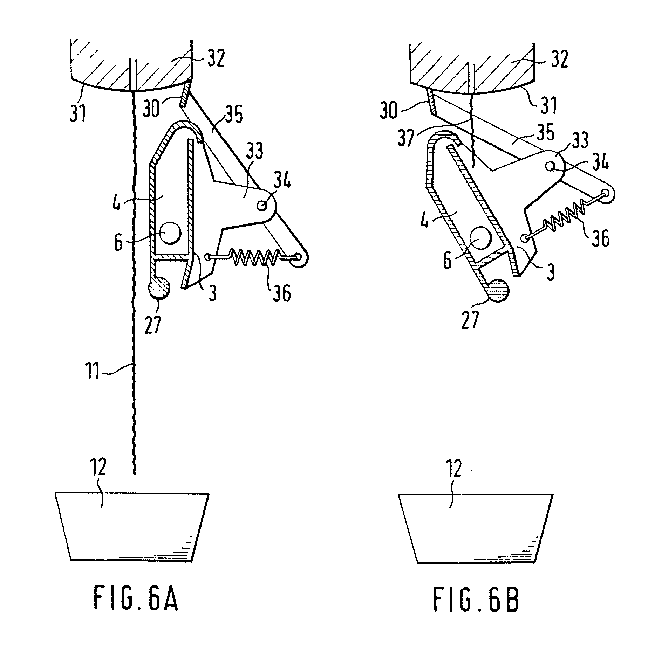

Die in den Fig. 6a und b dargestellte Vorrichtung zeigt diese ähnlich wie die Fig. 5a—d, im wesentlichen beschränkt auf das Auffangteil 3, so daß bezüglich der weiteren Funktion der Vorrichtung auf die Erläuterungen zu Fig. 4 verwiesen werden kann.

Bei der Vorrichtung gemäß den Fig. 6a und b ist als Trennelement das Messer 30 vorgesehen, das bei der Bewegung des Auffangteils 3 aus der in Fig. 6a dargestellten Außerbetriebslage in die in Fig. 6b dargestellte Betriebslage über die Oberfläche 31 der Düsenanordnung 32 hinwegstreicht. Um diesen Vorgang zu ermöglichen, ist die Oberfläche 31 schwach gewölbt ausgebildet. Das Messer 30 ist an dem Ausleger 33 angelänkt, und zwar über die Achse 34, die den Hebel 35 trägt, an dessen einem Ende das Messer 30 befestigt ist. Am anderen Ende des Hebels 35 ist die Zugfeder 36 eingehängt, die außerdem am Ausleger 33 befestigt ist. Aufgrund der Wirkung der Zugfeder 36 wird dem Hebel 35 die Tendenz gegeben, sich im Uhrzeigersinn zu verdrehen. Er wird jedoch durch die Anlage des Messers 30 an der Oberfläche 31 an dieser Bewegung gehindert.

Ausgehend von der in Fig. 6a dargestellten Außerbetriebslage ergibt sich damit folgende Funktion: In der Außerbetriebslage fließen Stränge 11 senkrecht aus der Düsenanordnung 32 und werden von dem Behälter 12 aufgefangen. Wenn nun das Auffangteil 3 in die in der Fig. 6b dargestellte Betriebslage verschwenkt wird, dann wird dabei über den Ausleger 33 auch der Hebel 35 und damit das Messer 30 entlang der Oberfläche 31 der Düsenanordnung 32 verschoben, wobei das Messer 30 über die Oberfläche 31 hinweggleitet und mit einem Schlage sämtliche hintereinander liegende Düsen der Düsenanordnung 32 überstreicht. Dabei durchschneidet das Messer 30 die Stränge 11, so daß sich eine Unterbrechung des Flusses der Stränge ergibt. In diese Unterbrechung fällt die Bewegung des Auffangteils 3 derart hinein, daß die nach der Unterbrechung weiterfließenden Stränge 37 (siehe Fig. 6b) nunmehr auf das in der Betriebslage befindliche Auffangteil 3 auftreffen. Es erfolgt dann vom Auffangteil 3 die weitere Zuleitung der Stränge 37 in der im Zusammenhang mit der Fig. 4 beschriebenen Weise zu der darunterliegenden Ablaufrinne und dem Granulator 13.

Es sei noch darauf hingewiesen, daß das Messer 30 an seinen beiden Enden über je einen Arm 35 getragen wird, so daß zwischen den beiden Armen (in der Fig. 6b ist nur der vordere Arm sichtbar) ein Freiraum liegt, durch den Stränge 37 herabfließen können. Die Stränge 37 werden also nicht durch die Arme 35 in ihrem Fluß behindert.

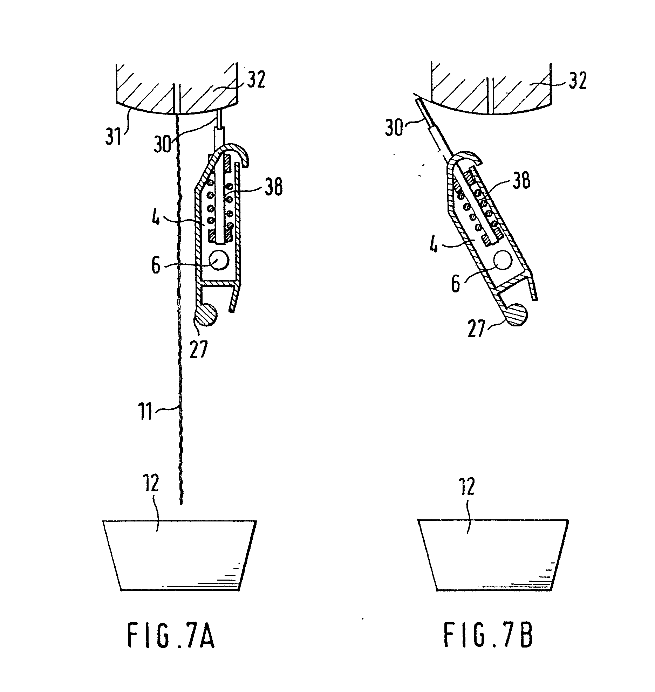

In Fig. 7a und b ist eine Vorrichtung dargestellt, die der Vorrichtung gemäß Fig. 6a und b entspricht, bei der jedoch der Hebel 35 durch das unter einer Federspannung stehende Teleskop 38 ersetzt ist.

## Patentansprüche

1. Vorrichtung zum Zuleiten von schmelzflüssigen Kunststoffsträngen (11, 22, 23, 29, 37) zu einer schrägen Ablaufrinne (1), die an ihrem oberen Ende bis hinter die Fallinie der aus Düsen (10, 32) austretenden Stränge reicht, in der Betriebslage die Stränge auffängt und in eine Stellung schwenkbar ist, in der sie den freien Durchtritt der Stränge neben ihr gestattet, wobei auf das obere Ende der Ablaufrinne ein Kühlwasserzulauf (5) gerichtet ist, dadurch gekennzeichnet, daß die Ablaufrinne (1) mit einer von ihrem oberen Ende entfernt angeordneten, quer zu ihr verlaufenden Schwenkachse (2, 26, 27) aus einer Betriebslage von den Strängen (11) weg derart schwenkbar ist, daß die Bewegung des oberen Endes (24) des Auffangteils (3) durch die Stränge (11) hindurch in eine Außerbetriebslage verläuft, in der die Fallinie der Stränge (11) hinter der gesamten Ablaufrinne liegt.

2. Vorrichtung nach Anspruch 1, dadurch gekennzeichnet, daß die Achse (2) am unteren Ende der Ablaufrinne (1) angeordnet ist.

3. Vorrichtung nach Anspruch 1, dadurch gekennzeichnet, daß die Achse (26) etwa in der Mitte der Ablaufrinne (1) angeordnet ist.

4. Vorrichtung nach Anspruch 1, dadurch gekennzeichnet, daß die Achse (27) im Bereich des oberen Drittels der Ablaufrinne (1) angeordnet ist.

5. Vorrichtung nach einem der Ansprüche 1—4, dadurch gekennzeichnet, daß das durch die Stränge (23) hindurchbewegte Ende (24) des Auffangteils (3) mit einem Trennelement (28, 30) gekoppelt ist, das bei der Bewegung dieses Endes (24) des Auffangteils (3) die Stränge (23) durchtrennt.

6. Vorrichtung nach Anspruch 5, dadurch gekennzeichnet, daß das Trennelement eine quer zu den Strängen verlaufende Stange (28) ist, die mit Abstand von dem durch die Stränge (23) hindurchbewegten Ende (24) des Auffangteils (3) an diesem angeordnet ist, bei der Bewegung des betreffenden Endes (24) die Stränge (23) auffängt und von dem Auffangteil (3) fernhält.

7. Vorrichtung nach Anspruch 5, dadurch gekennzeichnet, daß das Trennelement ein Messer (30) ist, das bei seiner Bewegung die Düsen (10) überstreicht.

## Claims

1. An apparatus for transmitting strands of thermoplastics materials (11; 22, 23, 29, 37) to an inclined drainage channel (1) which extends, at its upper end, to behind the line of fall of the strands emerging from nozzles (10, 32), collects the strands in the operating position and is pivotable into a position in which it permits the free passage of the strands alongside it, a supply (5) of cooling water being directed on to the end of the drainage channel, characterised in that the drainage channel (1) is pivoted, on a transverse pivot pin (2, 26, 27) spaced from its upper end, to swing out of an operating position, away from the strands (11), in such a manner that the movement of the upper end (24) of the collecting member (3) passes through the strands (11) into an inoperative position in which the line of fall of the strands (11) lies behind the whole drainage channel.

2. An apparatus as claimed in Claim 1, characterised in that the pin (2) is disposed at the lower end of the drainage channel (1).

3. An apparatus as claimed in Claim 1, characterised in that the pin (26) is disposed substantially in the middle of the drainage channel (1).

4. An apparatus as claimed in Claim 1, characterised in that the pin (27) is disposed in the region of the upper third of the drainage channel (1).

5. An apparatus as claimed in one of the Claims 1—4, characterised in that the end (24) of the collecting member (3) which moves through the strands (23) is coupled to a parting element (28, 30) which severs the strands (23) during the movement of this end (24) of the collecting member (3).

6. An apparatus as claimed in Claim 5, characterised in that the parting element is a bar (28), which extends transversely to the strands, is disposed on the collecting member (3), spaced from the end (24) theroef which moves through the strands (23), intercepts the strands (23) during the movement of the end (24) in question and keeps them away from the collecting member (3).

7. An apparatus as claimed in Claim 5, characterised in that the parting element is a knife (30) which sweeps over the nozzles (10) during its movement.

## Revendications

1. Dispositif d'alimentation de bandes de matière synthétique en fusion vers un conduit d'évacuation incliné dont l'extrémité supérieure s'étend jusque derrière la ligne de chute des bandes sortant de buses, qui reçoit les bandes lorsqu'il est en service et qui peut pivoter dans une position dans laquelle est possible la sortie libre des bandes indépendamment de lui, une conduite d'alimentation d'eau de refroidissement étant dirigée sur l'extrémité supérieure du conduit d'évacuation, caractérisé en ce que le conduit d'évacuation (1) peut pivoter, autour d'un axe (2), (26), (27) perpendiculaire, disposé à une certaine distance de son extrémité supérieure, de sa position de service pour s'éloigner des bandes de matière synthétique (11), de sorte que le mouvement de l'extrémité supérieure (24) du réceptacle (3) du conduit d'évacuation (1) passe à travers les bandes (11) pour venir dans une position hors service dans laquelle la ligne de chute des bandes est située derrière le conduit d'évacuation.

2. Dispositif selon la revendication 1 charactérisé en ce que l'axe (2) est disposé à l'extrémité inférieure du conduit d'évacuation.

3. Dispositif selon la revendication 1 caractérisé en ce que l'axe d'articulation (26) est disposé sensiblement dans la zone médiane du conduit d'évacuation.

4. Dispositif selon la revendication 1 caractérisé en ce que l'axe d'articulation (27) est disposé dans la zone du tiers supérieur du conduit d'évacuation.

5. Dispositif selon l'une des revendications 1 à 4 caractérisé en ce que l'extrémité (24) du réceptacle (3) qui est déplacé à travers les bandes (23) est accouplée avec un élément de séparation (28), (30) qui coupe les bandes lors de ce mouvement de l'extrémité (24) du réceptacle (3).

6. Dispositif selon la revendication 5 caractérisé en ce que l'élément de séparation est constitué par une barre (28) perpendiculaire aux bandes (23), qui est disposé sur le réceptacle à une certaine distance de son extrémité supérieure déplacée à travers les bandes et qui recueille lesdites bandes lors dudit déplacement de l'extrémité (24) pour les maintenir éloignées du réceptacle.

7. Dispositif selon la revendication 5 caractérisé en ce que l'élément de séparation est constitué par une lame (30) balayant les buses (10) lors de son déplacement.

FIG.1

FIG. 2

FIG.3

FIG.4

FIG.5A          FIG.5B          FIG.5C          FIG.5D

FIG. 6A

FIG. 6B

FIG.7A

FIG.7B